# EUROPÄISCHE PATENTSCHRIFT

(11) **EP 1 630 428 B1**
(45) Veröffentlichungstag und Bekanntmachung des Hinweises auf die Patenterteilung: **16.04.2008**
(21) Anmeldenummer: 05107381.5
(22) Anmeldetag: 11.08.2005
(51) Int. Cl.: F16B 15/00, F16B 19/14

(54) **Befestigungsbolzen mit zunehmender Gewindeprofilierung**
Fastening bolt with progressively threaded profile
Goujon de fixation à profil de filetage progressif

(30) Priorität: 23.08.2004 DE 102004040701
(43) Veröffentlichungstag der Anmeldung: 01.03.2006
(73) Patentinhaber: HILTI Aktiengesellschaft, 9494 Schaan (LI)
(72) Erfinder: Ortler, Rene, 9494, Schaan (LI); Dietze, Sven, 6800, Feldkirch (AT)
(74) Vertreter: Wildi, Roland

(56) Entgegenhaltungen:
- DE-A1- 10 119 800
- US-A- 1 876 021
- US-A- 2 944 261
- US-A- 5 127 785

## Beschreibung

Die vorliegende Erfindung betrifft ein Befestigungselement der im Oberbegriff von Patentanspruch 1 genannten Art.

Derartige Befestigungselemente, wie z.B. Nägel, Bolzen und dgl. aus Stahl, werden in der Befestigungstechnik zum Befestigen von Gegenständen an harten Aufnahmewerkstoffen, wie Beton, Metall oder Gestein, verwendet. Die Befestigungselemente weisen dazu einen Schaft mit einer sich in Setzrichtung verjüngenden Spitze und einem am anderen Ende des Schaftes liegenden Kopf auf, welcher gegenüber dem Durchmesser des Schaftes vergrössert ist. Der Eintreibvorgang erfolgt mit hoher Geschwindigkeit schlagend oder eintreibend beispielsweise mittels brennkraftbetriebener Setzgeräte.

Aus der DE 101 19 800 A1 ist ein Befestigungselement mit einem Kopf und einem sich daran anschliessenden Schaft bekannt, der in einer Spitze endet. Der Schaft weist dabei einen ballistischen bzw. balligen ersten Abschnitt, der sich zur Spitze hin verjüngt, und einen sich in Richtung des Kopfes daran anschliessenden zweiten Abschnitt auf. Der ballistische erste Abschnitt sowie der nachfolgende zweite Abschnitt sind zumindest teilweise mit einer als Randrierung ausgebildeten Profilierung versehen. Diese Profilierung erhöht die Reibung und damit den Abrieb.

Aus der US 5,127,785, von der die vorliegende Erfindung ausgeht, ist ein Nagel zum Abhängen von Trägern bekannt, der einen Schaft aufweist der aus einem balligen, sich zu einer Spitze hin verjüngendem ersten Abschnitt und einem zylindrischen zweiten Abschnitt besteht. Der Kopf, d.h. das der Spitze abgewandte Ende des Schaftes weist denselben Durchmesser auf, wie der zylindrische Schaftabschnitt. Auf dem Schaft angeordnet ist ein tiefer eingeschnittenes Gewindeprofil, welches noch vor der Spitze endet und auch den hinteren Schaftbereich nur teilweise umgibt. Das Gewinde soll dabei der Abfuhr von Material dienen, das vom Nagel vertrieben wird und die Reibung zwischen Nagel und Untergrund erhöhen.

Ein Nachteil bei derartigen Befestigungselementen mit deutlich eingetieften Gewindenuten und einer mittelsteilen Gewindesteigung ist, dass wenn eine sehr schnelle Entreibbewegung, z. B. durch ein brennkraftbetriebenes Setzgerät, erfolgt, das Gewinde nicht zu einer Drehung des Nagels führt, sondern wie eine Raspel wirkt, die beim Eintreibvorgang viel Abrieb erzeugt. Dieser Abrieb vermindert dann die Haltekraft des Nagels im Untergrund.

Die Aufgabe der vorliegenden Erfindung liegt darin, die oben genannten Nachteile zu vermeiden und ein Befestigungselement bereitzustellen, das eine gute Haltewirkung in harten Werkstoffen, wie z. B. Beton oder Stahl aufweist.

Dieses wird durch die in Patentanspruch 1 wiedergegebenen Massnahmen erreicht. Demnach weist die Gewindeprofilierung am zweiten Abschnitt, der zwischen dem Kopf und dem ersten Abschnitt liegt eine konstante, steile Steigung mit einem Steigungswinkel im Bereich von 50° bis 74° auf. Die Steigung der Gewindeprofilierung im ersten, sich an die Spitze anschliessenden Abschnitt nimmt ausgehend von dem Steigungswinkel des zweiten Abschnitts zur Spitze hin zu und weist auf halber Länge zwischen der Spitze und dem gegenüberliegenden Ende des ersten Abschnitts einen Steigungswinkel von wenigstens 75° auf.

Durch diese Geometrie der Profilierung wird erreicht, dass sich ein erfindungsgemässes Befestigungselement auch bei hohen Eintreibgeschwindigkeiten von > 50 m/s, die beim Setzen mit einem brennkraftbetriebenen Setzgerät auftreten, in den Untergrund eindreht und so ein erhöhter Abrieb vermieden wird. Vielmehr wird ein Gewindeeinschnitt im Untergrund erzeugt, der auf Grund eines verbesserten Formschlusses die Haltewirkung des Befestigungselementes im Untergrund erhöht. In metallischem Untergrund können z. B. mit Befestigungselementen von 4 mm Schaftdurchmesser bei einer mittleren Eintreibtiefe von 12 mm mittlere Haltewerte von 15 KN erzielt werden.

Günstig ist es, wenn die Gewindeprofilierung wenigstens 3 Profilnuten, vorzugsweise wenigstens 10 Profilnuten aufweist. Hierdurch wird die Drehung des Befestigungselementes verbessert. Sehr gute Ergebnisse wurden z. B. mit Befestigungselementen erzielt, die 10 bis 15 Profilnuten aufwiesen.

Vorteilhaft ist es, wenn die Profilnuten gleichmässig am Umfang der profilierten Bereiche des Schafts verteilt sind. Hierdurch können konstant gute Haltewerte erreicht werden.

Von Vorteil ist es ferner, wenn aie Profiltiefe der Profilnuten im zweiten Abschnitt im Wesentlichen (d. h. innerhalb der Fertigungstoleranzen) konstant ist und einen Wert aus einem Wertebereich von 0,04 bis 0,15 mm aufweist. Die Profiltiefe ist in dem zweiten Abschnitt also z. B. konstant bei 0,06 mm. Im sich an den zweiten Abschnitt anschliessenden ersten Abschnitt nimmt die Profiltiefe der Profilnuten zur Spitze hin ab und liegt in einem Bereich zwischen 0,01 und 0,15 mm. Wenn die Profiltiefe also z. B. im zweiten Bereich bei konstant 0,06 mm liegt, nimmt die Profiltiefe im ersten Bereich z. B. von diesen 0,06 mm auf minimal 0,01 mm zur Spitze hin ab. Durch diese Profiltiefen wurde ein guter Kompromiss gefunden der eine gute Drehung der Befestigungselemente ermöglicht und eine nur minimale Reduktion der Eintreibenergie hervorruft.

Günstig ist es ferner, wenn die Profilbreite der Profilnuten im zweiten Abschnitt im Wesentlichen (d. h. innerhalb der Fertigungstoleranzen) konstant ist und einen Wert aus einem Wertebereich zwischen 0.1 und 0.8 mm aufweist. Die Profilbreite oder Nutbreite ist in dem zweiten Abschnitt also z. B. konstant bei 0,5 mm. Vorteilhaft nimmt die Profilbreite der Profilnuten im ersten Abschnitt zur Spitze hin ab und liegt in einem Bereich zwischen 0.8 und 0.05 mm. Wenn die Profilbreite also z. B. im zweiten Bereich bei konstant 0,5 mm liegt nimmt die Profiltiefe im ersten Bereich z. B. von diesen 0,5 mm auf minimal 0,2 mm zur Spitze hin ab. Diese Profilbreiten verstärken ebenfalls den Effekt der Drehung des Befestigungselementes bei hohen Eintreibgeschwindigkeiten.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.

Es zeigen:
- Fig. 1: ein erfindungsgemässes Befestigungselement in Seitenansicht,
- Fig. 2: das Befestigungselement in einem Schnitt gemäss der Linie II - II aus Fig. 1,
- Fig. 3: das Befestigungselement in einem Schnitt gemäss der Linie III - III aus Fig. 1.

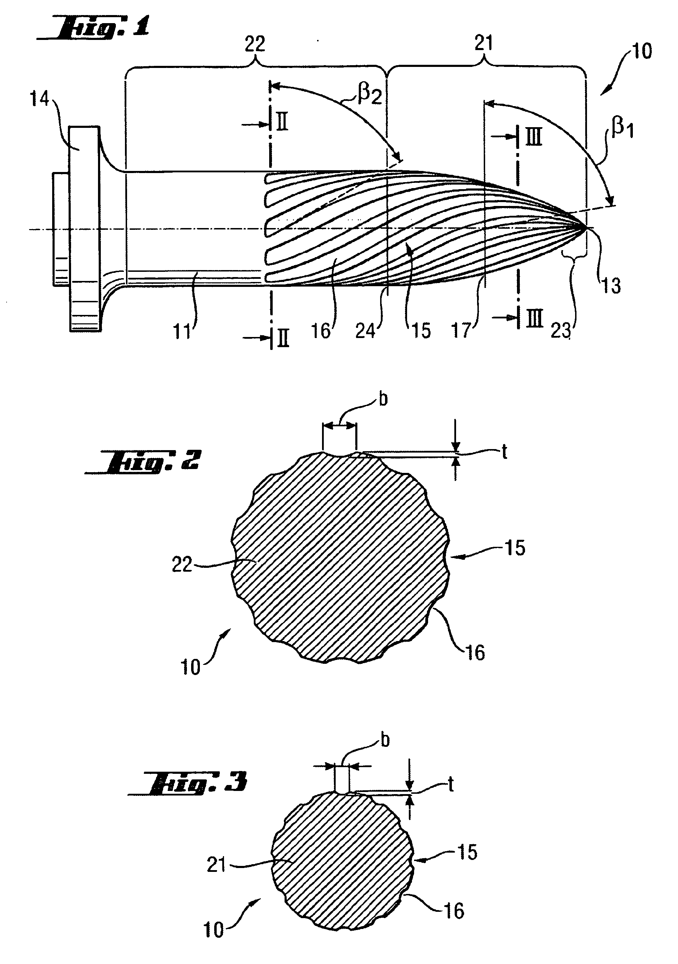

In den Figuren 1 bis 3 ist ein als Nagel ausgebildetes Befestigungselement 10 wiedergegeben. Dieses Befestigungselement 10 weist einen Kopf 14, einen sich daran anschliessenden Schaft 11 und eine Spitze 13 an dem, dem Kopf 14 gegenüberliegenden Ende des Schaftes 11 auf. Der Schaft 11 weist zwei Abschnitte auf, einen ersten balligen Abschnitt 21, der sich direkt an die Spitze 13 anschliesst und einen zweiten Abschnitt 22, der vorliegend im Wesentlichen zylindrisch ausgebildet ist und der sich von dem der Spitze 13 gegenüberliegenden Ende 24 des ersten Abschnitts 21 bis zum Kopf 14 erstreckt. Auf einem dem ersten Abschnitt 21 benachbarten Bereich des zweiten Abschnittes 22 ist eine Gewindeprofilierung 15 angeordnet, die sich bis auf den ersten Abschnitt 21 erstreckt. Die Gewindeprofilierung 15 weist dabei im vorliegenden Ausführungsbeispiel zwölf Profilnuten 16 auf. Die Gewindeprofilierung 15 weist im Bereich des zweiten Abschnittes 22 eine konstante steile Steigung mit einem Steigungswinkel β₂ von 60° auf. Dabei ist β definiert durch tan β = Pₕ/(TTd) mit Pₕ = Steigung der Gewindeprofilierung und mit d = Durchmesser des Befestigungselementes 10. Im Bereich des ersten Abschnittes 21 nimmt die Steigung und der Steigungswinkel β zur Spitze 13 hin zu. So ist der Steigungswinkel β₁ an einem Punkt der auf der halben Länge 17 zwischen dem Ende 24 des ersten Abschnittes 21 und der Spitze 13 liegt grösser als 75°. In dem vorliegenden Ausführungsbeispiel läuft die Profilierung bis zur Spitze und ist im vordersten, der Spitze 13 zugewandten Bereich 23 des ersten Abschnittes 21 nahezu koaxial zur Längserstreckung des Befestigungselementes 10 verlaufend angeordnet. Es bleibt zu bemerken, dass dieser vorderste Bereich 23 auch ohne eine Profilierung ausgebildet sein kann.

Die Profilnuten 16 der Gewindeprofilierung 15 weisen im Bereich des zweiten Abschnittes 22 eine konstante Profil- bzw. Nuttiefe t von 0,06 mm und eine konstante Nutbreite b von 0,5 mm auf, bei einem Durchmesser des zweiten Abschnittes 22 von 4 mm. Am ersten Abschnitt 21 nimmt die Profil- bzw. Nuttiefe t von 0,06 mm am Ende 24 auf 0,01 mm im Bereich der Spitze 13 ab. Die Nutbreite b nimmt ebenfalls von anfänglichen 0,5 mm am Ende 24 auf 0,2 mm im Bereich der Spitze 13 ab.

## Patentansprüche

1. Befestigungselement, wie ein Bolzen, Nagel oder Stift, mit einem Schaft (11) an dessen einem Ende eine Spitze (13) und an dessen gegenüberliegenden anderen Ende ein Kopf (14) angeordnet ist, und mit einem ersten balligen Abschnitt (21) der sich von der Spitze (13) ausgehend in Richtung des Kopfes (14) erstreckt, und mit einem zweiten Abschnitt (22) der sich an den ersten balligen Abschnitt (21) in Richtung des Kopfes (14) anschliesst, und mit einer an dem Schaft (11) angeordneten Gewindeprofilierung (15)
**dadurch gekennzeichnet,**
**dass** die Gewindeprofilierung (15) am zweiten Abschnitt (22) eine konstante, steile Steigung mit einem Steigungswinkel (β₂) im Bereich von 50° bis 74° aufweist, und die Steigung der Gewindeprofilierung (15) im ersten Abschnitt (21) ausgehend von dem Steigungswinkel (β₂) des zweiten Abschnitts (22) zur Spitze (13) hin zunimmt und auf halber Länge (17) zwischen der Spitze (13) und dem gegenüberliegenden Ende (24) des ersten Abschnitts (21) einen Steigungswinkel (β₁) von wenigstens 75° aufweist.

2. Befestigungselement, nach Anspruch 1, **dadurch gekennzeichnet, dass** die Gewindeprofilierung (15) wenigstens 3 Profilnuten (16) aufweist.

3. Befestigungselement, nach Anspruch 1 oder 2, **dadurch gekennzeichnet, dass** die Gewindeprofilierung (15) wenigstens 10 Profilnuten (16) aufweist.

4. Befestigungselement, nach einem der Ansprüche 1 bis 3, **dadurch gekennzeichnet, dass** die Profilnuten (16) gleichmässig am Umfang der profilierten Bereiche des Schafts (11) verteilt sind.

5. Befestigungselement, nach einem der Ansprüche 1 bis 4, **dadurch gekennzeichnet, dass** die Profiltiefe (t) der Profilnuten (16) im zweiten Abschnitt (22) im Wesentlichen konstant ist und einen Wert aus einem Wertebereich von 0,04 bis 0,15 mm aufweist.

6. Befestigungselement, nach einem der Ansprüche 1 bis 5, **dadurch gekennzeichnet, dass** die Profiltiefe (t) der Profilnuten (16) im ersten Abschnitt (21) zur Spitze (13) hin abnimmt und in einem Bereich zwischen 0,01 und 0,15 mm liegt.

7. Befestigungselement, nach einem der Ansprüche 1 bis 7, **dadurch gekennzeichnet, dass** die Profilbreite (b) der Profilnuten (16) im zweiten Abschnitt (22) im Wesentlichen konstant ist und einen Wert aus einem Wertebereich zwischen 0.1 und 0.8 mm aufweist.

8. Befestigungselement, nach einem der Ansprüche 1 bis 8, **dadurch gekennzeichnet, dass** die Profilbreite (b) der Profilnuten (16) im ersten Abschnitt (21) zur Spitze hin abnimmt und in einem Bereich zwischen 0.8 und 0.05 mm liegt.

## Claims

1. Fastening element, such as a bolt, nail or pin, comprising a shaft (11) at one end of which a point (13) is arranged and at the end opposed to said point a head (14) is arranged, and having a first ball-like section (21) which extends from the point (13) in the direction of the head (14), and having a second section (22) which adjoins the first ball-like section (21) in the direction of the head (14) and having thread profiling (15) arranged on the shaft (11), **characterised in that**, on the second section (22), the thread profiling (15) has a constant, steep inclination with an inclination angle (β₂) in the range of 50° to 74° and the inclination of the thread profiling (15) in the first section (21) increases starting from the inclination angle (β₂) of the second section (22) towards the point (13) and, at half the length (17) between the point (13) and the opposing end (24) of the first section (21), has an inclination angle (β₁) of at least 75°.

2. Fastening element according to claim 1, **characterised in that** the thread profiling (15) has at least 3 profile grooves (16).

3. Fastening element according to claim 1 or 2, **characterised in that** the thread profiling (15) has at least 10 profile grooves (16).

4. Fastening element according to one of the claims 1 to 3, **characterised in that** the profile grooves (16) are evenly distributed round the periphery of the profiled region of the shaft (11).

5. Fastening element according to one of the claims 1 to 4, **characterised in that** the profile depth (t) of the profile grooves (16) in the second section (22) is substantially constant and has a value in the range of 0.04 mm to 0.15 mm.

6. Fastening element according to one of the claims 1 to 5, **characterised in that** the profile depth (t) of the profile grooves (16) in the first section (21) decreases towards the point (13) and has a value in the range of 0.01 mm to 0.15 mm.

7. Fastening element according to one of the claims 1 to 7, **characterised in that** the profile width (b) of the profile grooves (16) in the second section (22) is substantially constant and has a value in the range of 0.1 mm to 0.8 mm.

8. Fastening element according to one of the claims 1 to 8, **characterised in that** the profile width (b) of the profile grooves (16) in the first section (21) decreases towards the point and has a value in the range of 0.8 mm to 0.05 mm.

## Revendications

1. Élément de fixation, tel que goujon, clou ou cheville, comprenant une tige (11), à une extrémité de laquelle est disposée une pointe (13) et à l'autre extrémité opposée de laquelle est disposée une tête (14), et comprenant une première portion bombée (21) qui, à partir de la pointe (13), s'étend en direction de la tête (14), et comprenant une deuxième portion (22) qui se raccorde à la première portion bombée (21) en direction de la tête (14), et comprenant un profil de filetage (15) disposé sur la tige (11), **caractérisé en ce que**, dans la deuxième portion (22), le profil de filetage (15) présente une pente raide constante avec un angle d'hélice (β₂) compris entre 50° et 74°, et, dans la première portion (21), la pente du profil de filetage (15) augmente vers la pointe (13) à partir de l'angle d'hélice (β₂) de la deuxième portion (22) et présente, à la moitié de la longueur (17) entre la pointe (13) et l'extrémité opposée (24) de la première portion (21), un angle d'hélice (β₁) d'au moins 75°.

2. Élément de fixation selon la revendication 1, **caractérisé en ce que** le profil de filetage (15) présente au moins 3 gorges de profil (16).

3. Élément de fixation selon la revendication 1 ou 2, **caractérisé en ce que** le profil de filetage (15) comporte au moins 10 gorges de profil (16).

4. Élément de fixation selon une des revendications 1 à 3, **caractérisé en ce que** les gorges de profil (16) sont réparties de manière uniforme sur la circonférence des zones profilées de la tige (11).

5. Élément de fixation selon une des revendications 1 à 4, **caractérisé en ce que**, dans la deuxième portion (22), la profondeur de profil (t) des gorges de profil (16) est sensiblement constante et possède une valeur appartenant à une plage de valeurs comprise entre 0,04 et 0,15 mm.

6. Élément de fixation selon une des revendications 1 à 5, **caractérisé en ce que**, dans la première portion (21), la profondeur de profil (t) des gorges de profil (16) diminue en direction de la pointe (13) et est comprise entre 0,01 et 0,15 mm.

7. Élément de fixation selon une des revendications 1 à 7, **caractérisé en ce que**, dans la deuxième portion (22), la largeur de profil (b) des gorges de profil (16) est sensiblement constante et possède une valeur appartenant à une plage de valeurs comprise entre 0,1 et 0,8 mm.

8. Élément de fixation selon une des revendications 1 à 8, **caractérisé en ce que**, dans la première portion (21), la largeur de profil (b) des gorges de profil (16) diminue en direction de la pointe et est comprise entre 0,8 et 0,05 mm.
